# EUROPEAN PATENT APPLICATION

(11) **EP 4 411 153 A1**
(43) Date of publication of application: **07.08.2024**
(21) Application number: 21959504.8
(22) Date of filing: 28.12.2021
(51) Int. Cl.: F16B 39/24

(54) **WASHER AND FASTENING STRUCTURE, AND FASTENING RELEASE METHOD**

(30) Priority: 30.09.2021 WO PCT/JP2021/036329
(71) Applicant: Nippon Plarad Co., Kobe-shi, Hyogo, 651-2404 (JP)
(72) Inventor: SAEKI Hiroshi, Kobe-shi Hyogo 651-2404 (JP)
(74) Representative: Zinkler, Franz
(86) International application number: PCT/JP2021/048778
(87) International publication number: WO 2023/053470

(57) **Abstract**

The object of the invention is to provide a washer and a fastening structure and a releasing method for fastening, which would not be loosened in the state of the fastening, and be possible to loosen it simply at maintenance etc.

It is a fastening structure to place a washer 2 between the tip of a screw rod 12, to apply a nut 1, and to fix an installation object 11 to an attachment material 13.

The nut 1 is provided a first surface 1A in which
a slope portion, in which height is gradually formed to lower toward the tightening rotation direction of the nut, is provided according to the circumferential direction,
the washer 2 is provided with
a second surface 2A that has the slope portion formed corresponding to a slope portion 1Aa of the first surface 1A according to the circumferential direction is provided,
the washer and the nut are provided such that the slope portion of the first surface and the second surface are overlapped and superposing up and down mutually,
configuration of the nut and the washer are formed such that they are coincident with the circumferential direction,
in the state that the slope portion 1Aa of the first surface 1A and a slope portion 2Aa on the second surface are overlapped without the clearance.

## Description

### [Technical Field]

This invention relates to a washer and a fastening structure, and a method of releasing thereof.

### [Background Art]

Regarding to preventing loosening, many devices have been applied and supplied to practical use, many contraptions such as
a method of using a spring washer, a method of using a double nut, and a method of penetrating a cotter pin to a nut and a bolt, are supplied to practical use.
However, the effect is insufficient and loosening is caused by such as vibration, and the mechanism and the processing are complicate and expensive.

Therefore, pin mechanisms for locking are proposed.

For example, the pin mechanism for locking in which the lock pin is intruded into the hole formed in the nut inner surface and thereby the nut inner surface is pushed, expanded, thereby and generating the loose stop pressure is proposed.

Moreover, the following pin mechanisms for locking have been proposed.

Namely, the lock pin inserting hole, which is diagonally penetrated to the position separated a little from the nut inner surface, is opened, and
the lock pin, which is a little longer than the length of the lock pin inserting hole and its point is pointed, is inserted.

Thereafter, the nut is screwed and tightened by hand into the male screw portion of the bolt.

After the nut arrives to the washer, it is strongly tightened with a tool on the market such as wrenches.

The fixing object placed between two washers is fixed.

By further tightening, the lock pin is pushed to the washer.

The lock pin point is firmly bound to the male screw portion.

Thereby, the loose stop effect is caused by pushing the male screw portion.

By more strongly tightening, the lock pin point is inroaded into the male screw portion like the paling.

As a result, a loose stop effect is more increased.

(For instance, See Patent Documents 1 and 2)

### [Prior Art Reference]

### [Patent Document]

[Patent Document 1]
   JP 2009-293793, A
[Patent Document 2]
   JP 2011-179679, A

### [Summary of Invention]

### [Problems to be Solved by the Invention]

In the prior arts disclosed in Patent Document 1 and Patent Document 2, it is fixed by pushing and expanding the nut inner surface and it is fixed by digging and fixing the lock pin point into the screw stick of the bolt.

Therefore, when loosening a nut at maintenance etc., the screw portion of the screw stick is damaged and it is not possible to recycle.

Therefore, the object of the invention is to provide a washer and a fastening structure and a releasing method for fastening, in which,
it would not be loosened in the state of the fastening, and it would be possible to loosen it simply at maintenance etc., such that the screw rod, the nut, and the washer, etc. can be recycled.

### [Solution to Problem]

The invention is a fastening structure to fix an installation object to an attachment material wherein,
a screw stick to provide the installation object is penetrated into an installation hole of an attachment member,
a tip of the screw stick is projected,
a nut is placed to the tip of the screw via a washer,
the nut is provided a first surface in which
a slope portion, in which height is gradually formed to lower toward the tightening rotation direction of the nut, is provided according to the circumferential direction,
the washer is provided with
a second surface that has the slope portion formed corresponding to a slope portion of the first surface in the nut according to the circumferential direction is provided,
the washer and the nut are provided such that the slope portion of the first surface and the second surface are overlapped and superposing up and down mutually,
configuration of the nut and the washer are formed such that they are coincident with the circumferential direction,
in the state that the slope portion of the first surface and the slope portion on the second surface are overlapped without the clearance.

In this specification, saying that "coincident with the circumferential direction" means that
mutual slope portions have coincident phases, when the nut and the washer are piled up, the overlapping of mutual slope portions are overlapped exactly without the clearance, on appearance, they are seeming like one nut.

Therefore, for instance, if it is a nut and a washer having the cross-section hexagon, six corners forming configuration are overlapped at the same position.

As a result, the contact surface of the nut and the washer has a slope portion in which the slope having the corresponding predetermined shape is formed.

Therefore, in the state that the washer and the nut are overlapped up and down, they would not be loosen even if the thumping vibration is received by working of the slope portion, and the state of the fastening would be sustained.

On the other hand, to release the fastening, the washer and the nut are rotated together so that it is possible to loosen without damaging of the screw rod, the nut or the washer and the like.

Therefore, the state of the fastening is simply released.

Therefore, components such as the screw rod, the nuts, and the washers can be recycled.

In this case, described in claim 2, as for the first surface and the second surface, it is preferable to have one, two, three or six slope portions having the identically-shaped.

That is to say, it is preferable that the number of the slope portions is to be six divided.

As described in claim 3, it is preferable that the nut and the washer are the configuration in which it has the cross-section hexagon and is same size of external configuration.

As described in claim 4, as for the washer, it is preferable that the surface on the other side to the second the surface is formed to the conic recess shape that has dented gradually toward the center portion.

As described in claim 5, as for the slope portion, it is preferable that the difference of elevation between the lowest position and the highest position is larger than 1/slope number of the screw pitches according to a slope number.

That is, for instance, where number of the slope is 1, it is 1/1(=1), where number of the slope is 3, it is 1/3 and where number of the slope is 6, it is 1/6, it is preferable that numerical value should be larger respectively.

As described in claim 6, it is preferable that the slope of the slope portion is formed like the spiral while sustaining the same lift angle according to the circumferential direction centering on the axis of the screw rod.

As described in claim 7, it is preferable that the outer periphery surface of the slope portion of one or both of the washer or the nut should be curve surface having diameter of the same size of opposite width as parallel of the washer or the nut, and the curve surface stands up from the locating of the lowest position of the slope portion.

Moreover, the invention of claim 8 is a method of releasing the fastening in the fastening structure according to any one of claims 1-7, including:
the step of by using a tool that has an engaging portion which is engaged with the outer periphery portion of the nut and the washer, and a hold portion concatenated to the engaging portion,
the engaging portion of the tool is engaged with the outer periphery portion of the nut,
the nut is rotated to the tightening rotation direction once, and
the configuration of the nut and the washer is coincident in the circumferential direction,
following the above step, the step of
   the engaging portion of the tool is engaged with the washer addition to the nut, and
   the nut and the washer are rotated together in the direction of loosening.

Moreover, the invention of claim 9 is
in case of providing the installation object to the attachment material by using the bolt or the nut,
the washer providing between the bolt head portion or the nut and the installation object,
including first member and second member using while piled up,
the first member comprising:
first surface which has slope portion to which height is gradually formed to lower toward tightening rotation direction of the nut according to circumferential direction,
the second member comprising:
   second surface that has the slope portion formed corresponding to a slope portion of the front page in the nut according to the circumferential direction and
   under the state that a slope portion of the first surface and a slope portion of the second surface is overlapped up and down without the clearance,
   the configuration of the first and the second members are coincident with in the circumferential direction.

Moreover, the invention of claim 10 comprising:
in case of providing the installation object to the attachment material by using the bolt or the nut,
the fastening structure that washer is provided between the bolt head portion or the nut and the installation object,
the washer is provided with the first member and the second member used while piled up,
the first member comprising first surface in which
in the circumferential direction, the slope portion of height lowers gradually toward the tightening rotation direction of the nut,
the second member comprising second surface in which
a slope portion is formed according to the circumferential direction corresponding to the slope of the first surface in the nut, and
second surface that comes in contact with the front surface of the nut is provided,
under state that the front surface and the second surface are overlapped up and down without the clearance,
the configuration of the first member and the second member are formed to coincident in the circumferential direction.

The invention of claim 11 is a method of releasing the fastening in the fastening structure described in claim 10, by using a tool comprising:
an engaging portion which is engaged with the outer periphery portion of the bolt head portion or the nut and washer, and
a hold portion concatenated to portion of the engaging portion,
an engaging portion of the tool is engaged with
the member on the bolt head portion or the nut
and the engaging portion of the tool is engaged with
the member on the bolt head portion or the member of the nut side of the first member or second member,
the member on the bolt head portion or the nut and
the member on the bolt head portion or the member of the nut side
are turned to the tightening rotation direction once,
the step that configuration of the first member and the configuration of the second member is put into the state coinciding in the circumferential direction,
following the step,
the portion of engaging portion of the tool is engaged with the bolt head portion or the nut, the first member and the second member,
the step wherein the bolt head portion or the nut, the first member and the second member are rotated in direction of loosening.

### [Advantageous Effects of Invention ]

The invention uses a slope portion to form the slope of the extending predetermined shape in the circumferential direction and
the contact surface of the bolt head portion or the nut and the contact surface of washer are formed.

Therefore, it will not be loosened even if the thumping vibration is received by the function of the slope portion and
when release the fastening, the bolt head portion and the nut, etc. can be simply loosened.

### [Brief Description of Drawings]

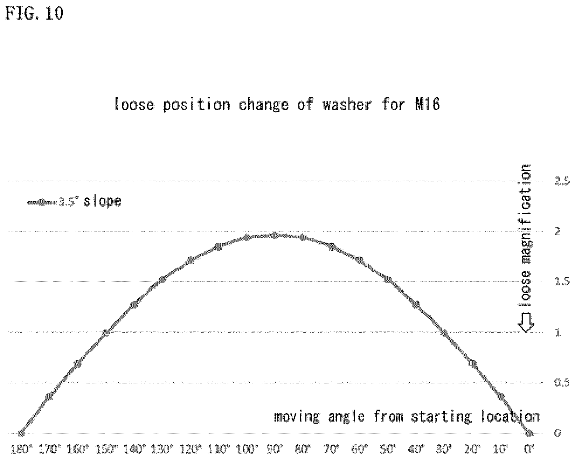

[Fig. 1]
   (a) is a drawing that indicates a fastening structure according to the present invention that combines the nut and the washer,
   (b) is a drawing that indicates only the nut and the washer.
[Fig. 2]
   The nut used for the fastening structure (fastening structure of two slope portions) is indicated, wherein
   (a) is a perspective view seen from the upper part, and
   (b) is a perspective view seen from the lower side.
[Fig. 3]
   As for the nut, it is explanatory drawing when a slope portion is one.
[Fig. 4]
   The nut used for the fastening structure (fastening structure of three slope portions) is indicated, wherein
   (a) is a perspective view seen from the upper part, and
   (b) is a perspective view seen from the lower side.
[Fig. 5]
   The nut used for the fastening structure (fastening structure of two slope portions) is indicated, wherein
   (a) is a perspective view seen from the upper part, and
   (b) is a perspective view seen from the lower side.
[Fig. 6]
   The nut used for the fastening structure (fastening structure of three slope portions) is indicated, wherein
   (a) is a perspective view seen from the upper part, and
   (b) is a perspective view seen from the lower side.
[Fig. 7]
   The Embodiment (fastening structure of two slope portions) is indicated where round pool (disk portion) is installed under washer, and

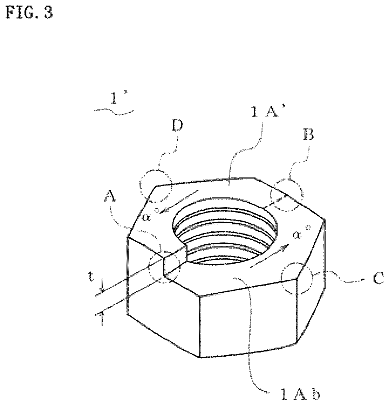

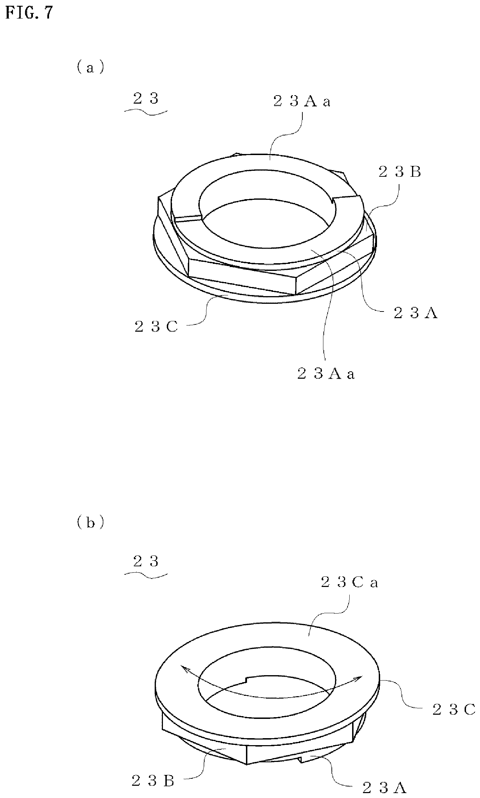

   Fig. 7(a) (b) is a drawing similar to Fig. 3(a) (b).
[Fig. 8]
   The Embodiment (fastening structure of three slope portions) is indicated where round pool (disk portion) is installed under washer.

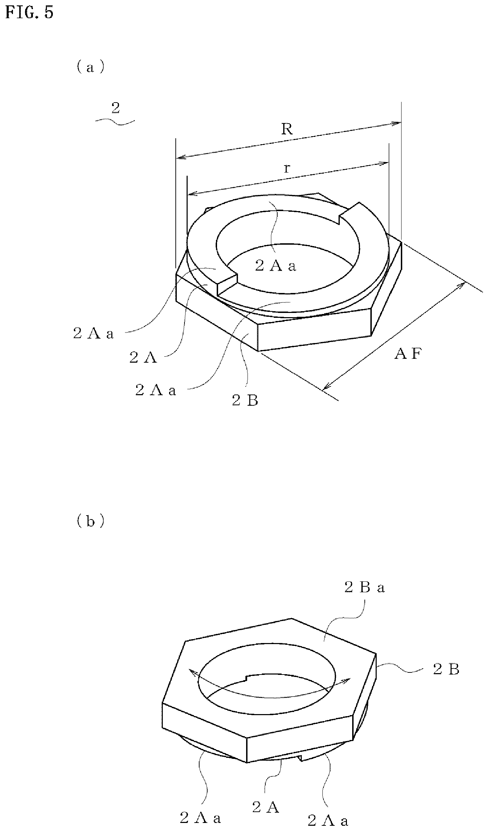

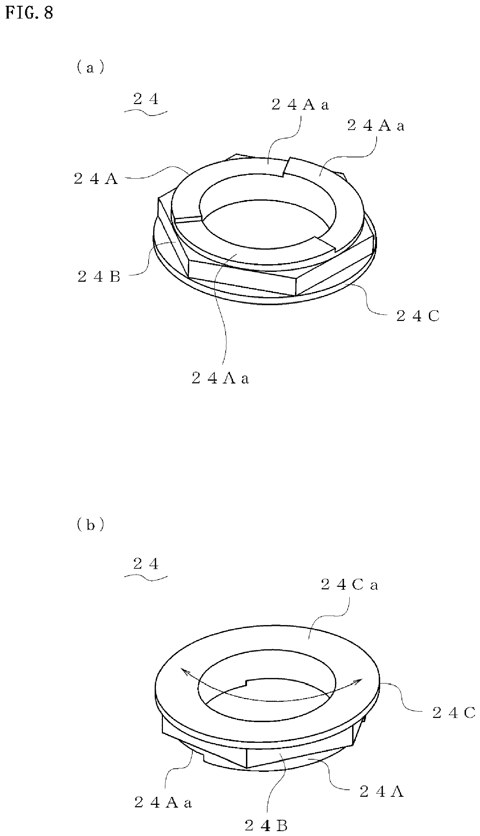

   Fig. 8(a) (b) is a drawing similar to Fig. 5(a) (b).
[Fig. 9]
   In case of having two slope portions, it is a perspective view for explaining loosening level of washer by position change by rotation.
   It is logical explanatory drawing of Fig. 10 at the same time.
[Fig. 10]
   It is a drawing to which indicates the position change of loosening easiness of washer used for the fastening structure.
[Fig. 11]
   It is a perspective view that indicates the example of the fastening structure with using two washers.

### [Description of Embodiments]

Hereafter, the embodiment of the invention (Embodiment) is described in the detail or more on the basis of the drawing.

Fig. 1(a) is a drawing that indicates a fastening structure according to the present invention that combines the nut and the washer,

Fig. 1(b) is a drawing that indicates only the nut and the washer.

Fig. 2 is the nut used for the fastening structure (fastening structure of two slope portions) is indicated, wherein

Fig. 2 (a) is a perspective view seen from the upper part, and

Fig. 2 (b) is a perspective view seen from the lower side.

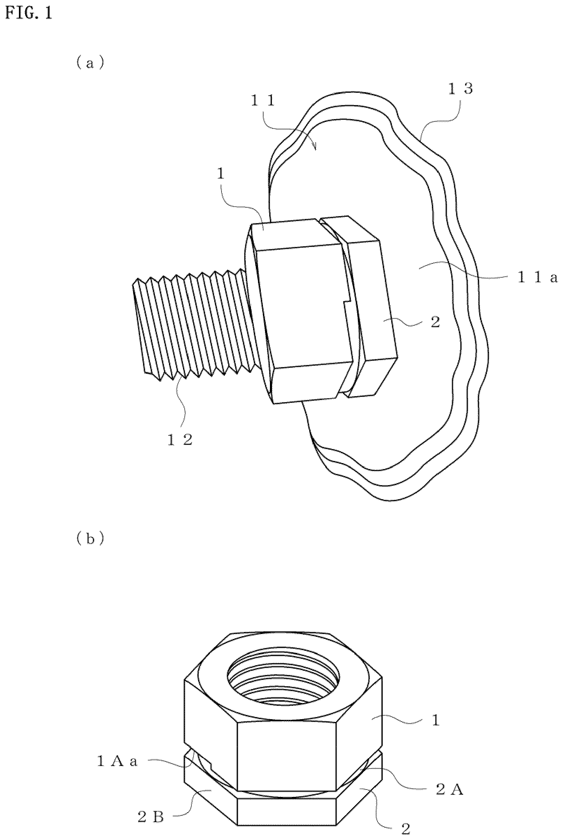

As indicated in Fig. 1(a) (b),
in the one embodiment of the fastening structure according to the present invention,
in order to provide installation object 11 to attachment material 13,
screw rod 12 (for instance, screw rod portion of the bolt) which is extended from the attachment material 13 is penetrates and the installation hole of installation object 11 is penetrated.

Thereafter, the tip of the screw rod 12 (tip of the screw rod portion) is projected from surface 11a of installation object 11 (from the surface of the other side where it touches attachment material side 13).

Moreover, the nut 1 is applied to the tip via washer 2 is placed.

Therefore, it is a structure to fix the installation object 11 to the attachment material 13.

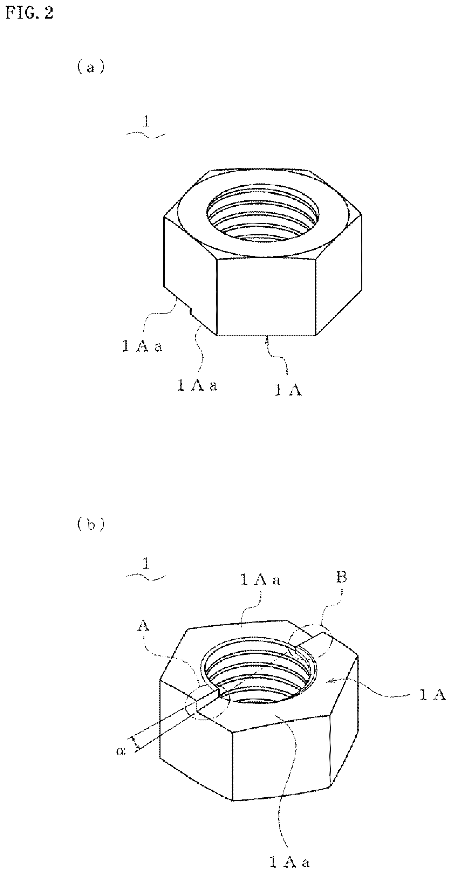

As indicated in Fig. 2(a) (b), the nut 1 has two slope portions 1Aa and 1Aa which are formed along with the circumferential direction.

That is to say, on the surface 1A (front page) of the side where the washer 2 and the nut 1 is overlapping come in contact, as height is gradually lower toward the tightening rotation direction of the nut 1.

Namely, one slope portion 1Aa forms one slope.

Two slope portions 1Aa and 1Aa have same slope angle and same slope area.

They are same shape though the phase shifts in the circumferential direction.

Namely, in the surface 1A of the nut 1, 1/2 of the whole is respectively formed as slope portion 1Aa and 1Aa that has the slope of the lift angle.
1/2 of the whole is respectively formed as the slope portion 1Aa and 1Aa that has the slope of the lift angle.

Though the slope portions 1Aa and 1Aa are the same shape, their shape are relative.

Moreover, the minimum position of the slope (the slope portion 1Aa) is highest position of the other slope.

Where the slope portion 1Aa is two, two differences is formed because there are two bounds of the slope portion 1Aa (boundary) .

It is the same height and the same shape in two slope portions.

Therefore, for instance, the same surface 1A (first surface) of two nut 1 can be mutually come in contact without space therebetween.

In Fig. 2(b), moreover, explaining on the basis of the slope portion 1Aa, which is formed on front side half portion of the nut 1.

A portion (the slope portion 1Aa) is the lowest in the slope and B portion is the highest position in the slope.

Slope starting location is just adjusted to a central position about a parallel opposite side of the cross-section hexagon.

However, if 1/2 of the surface 1A of the nuts 1 is respectively corresponding to slope portion 1Aa and 1Aa having same shape that has slope of straight lift angle,
the slope of the slope portion 1Aa and 1Aa may be started from the position besides the case indicated in Fig. 2(b),

As for slope lift angle (=α°) from A portion to B portion,
an average difference of elevation of A portion and B portion must be larger than 1/2 of the screw pitch of the screw rod 12.

(If number of the slope portion is one, must be larger than 1/1(=1), if number of the slope portion is three, must be larger than 1/3 and if number of the slope portion is six, must be larger than1/6)

Here, as for an average difference of elevation, strictly speaking, there is slightly a difference of height between difference on inner periphery side of the slope portion 1Aa and difference on outer periphery side of the slope portion 1Aa.

It is a meaning of the average value.

In addition, in the above embodiment, the slope of the slope portion 1Aa is formed from A toward B portion, portion by the advance plane of a straight-line constant angle degree.

However, the slope of the slope portion 1Aa may be formed like the spiral while sustaining the same lift angle according to the circumferential direction (circular arc direction) about the axis of screw rod 12.

In this case, the slope of a slope portion is a curve surface along circumferential direction.

The nut and washer that has such a slope form, for instance, can be manufactured by using 3D printer.

Moreover, the numeral of a slope portion is not limited to two.

For instance, in case of hexagon nut, the numeral of a slope portion is the number which can be divided for 6, i.e. 1, 3, and even 6.

For instance, in case of one, the difference is formed to B portion in Fig. 2(b).

However, as indicated in Fig. 3, on surface 1Ab of the nut 1', while keeping a slope lift angle is constant about the whole, if it lowers downward in parallel to become flat in B portion, the difference in B portion can be almost lost.

In a word, the slope portion 1Aa and 1Aa in Fig. 2(b) are thoroughly coupled mutually in B portion.

Consequently, the slope is consecutive and only one inclination portion 1Ab comes to exist according to the circumferential direction as indicated in Fig. 3.

For this case, it is assumed that it calls it in this specification, saying that "The numeral of a slope portion is one" in the surface 1A'.

When a slope portion is one, Height t of the difference of A portion increases to twice that of the difference when a slope portion is two (see Fig. 2(b)).

Because height of D portion rises more than C portion as for in Fig. 3, the thickness of the nut becomes thicker than C portion in D part.

On the contrary, in case of Fig. 2(b) that has two slope portions 1Aa and 1Aa, D part and C portion are equal in height (The thickness of the nut is the same).

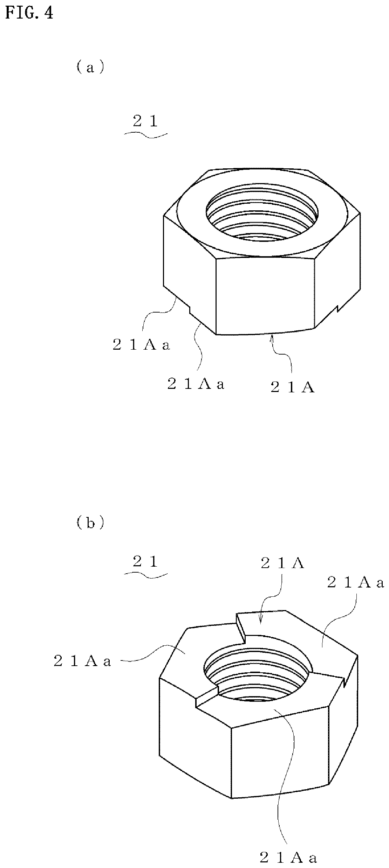

In addition, Fig. 4(a) (b) indicates nut 21 in case having three slope portions 21Aa, 21Aa, and 21Aa.

There are three slope portions 21Aa, 21Aa, and 21Aa on the surface 21A of the nut 21.

On the other hand, as indicating in Fig. 5 (a), also on washer 2, on the surface (the second surface) that comes in contact with the nut 1,
two slope portion 2Aa and 2Aa, which have the quite same shape and the same lift angle of the contact side of the nut 1, are similarly formed.

The configuration of the cross-section hexagon, inclination starting location of the slope portion 2Aa and 2Aa is also the same as the slope portion 1Aa and 1Aa on one nut side.

Therefore, touching the slope portions 1Aa, 1Aa, 2Aa, and 2Aa of the nut 1 and washer 2 mutually and when piling it up, it comes in succession with the nut 1 and washer 2 without the clearance.

The reason is that the position of the slope portion 1Aa, 1Aa, 2Aa, and 2Aa is that it is phased it between the nut 1 and washer 2.

Both the nut 1 and the washer 2 are the cross-section hexagons, and the configuration is same sizes.

However, as for washer 2, cylindrical connecting portion having the slope portions 2Aa and 2Aa have provided on washer main body 2B having the cross section hexagonal shape.

The connecting portion 2A to which form the surface (contact surface) with the nut 1, is cylindrical which has same outside diameter r of the same size of parallel opposite width AF of the washer 2.

From about the lowest position of the slope portion 2Aa, the connecting portion 2A stands up from main body 2B of washer (see Fig. 5(a)).

The outer periphery surface of the portion where a slope portion is formed is round and a processing in the cylindrical to be the curve surface.

However, not the washer side 2, outer periphery surface of portion where the slope portion 1Aa on the nut 1 side is formed, may be as curve surface.

Moreover, outer periphery surface both portions to which inclination portion of the washer 2 side and the nut 1 side is formed, may be processed to be the curve surface.

Back surface 2Ba of washer 2 is not a flat plane.

As indicated in Fig. 5 (b), from the outer periphery portion of the washer 2 toward the central portion, recess shape that has dented gradually like taper. That is to say, it is dented as the conic recess shape.

In a word, back surface 2Ba has slightly dented approaching to the central side.

Therefore, for instance, where the washer 2 is placed on a horizontal plane, only the outer periphery portion comes in contact with a horizontal plane,
the center portion will not come in contact in a horizontal plane while having floated from a horizontal plane.

As for the size of the recess of such back surface 2Ba, while rotating and tightening the nut 1, it gradually becomes small being pushed by nut lower surface.

However, when the nut 1 finally reaches the predetermined tightening power to screw rod 12 (bolt), it is preferable to be set to become a zero (= all aspects including the center portion of the washer 2 come in contact with a horizontal plane).

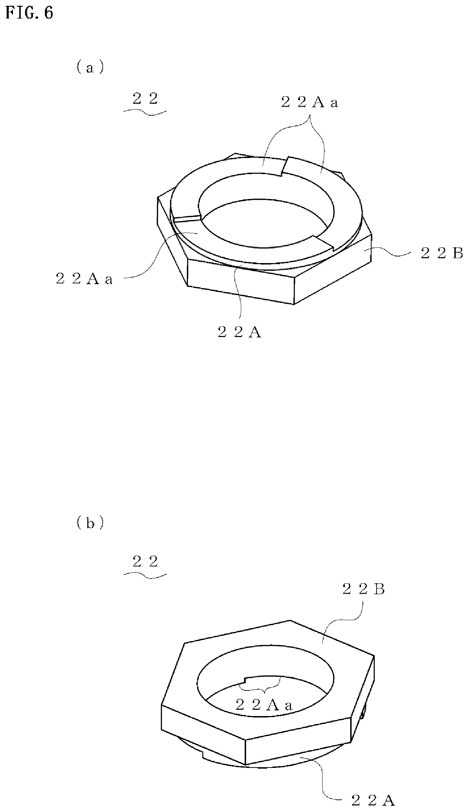

In addition, in Fig. 6 (a) (b), washer 22 is indicated where slope portion are three.

The slope portion in Fig. 4 (a) (b) are corresponding to three nuts 21.

Moreover, three inclination portion 22Aa, 22Aa, and 22Aa are formed on the engaging portion 22A.

In addition, the engaging portion 22A is provided on the upper part of washer main body 22B.

The size of the angle of the taper to which such a dent is formed has been decided in consideration of thickness and the material of the washer 2.

Washer is formed for instance by quenching carbon steel for M16, and if thickness is 4mm, the angle of the taper is little with about 0.5°.

This is a size whether being possible to feel it by the hand.

Moreover, as for the washer 2, engaging portion 2A is provided on the upper part of the washer main body 2B.

However, like washer 23 indicated in Fig. 7(a) (b), under main body 22B of washer having the cross section hexagonal shape, round edge which is combining with the washer 22, namely annular disk portion 23C is made.

On the lower surface of the disk portion 23C, recess 23Ca that is the dent of the conic recess shape can be formed.

Like this, when tighten the nut, the configuration of washer is larger than the case of cross section hexagon.

It becomes difficult to hurt the surface of the installation object that will come into contact with washer (the disk portion 23C) .

This is affirmed by the experiment.

The diameter of the disk portion 23C is the same as the nut 1, that is, the interval between the corner and the corner of washer 2 or length any more.

In addition, in the structure similar to the washer 23 indicated in Fig. 7(a) (b), washer 24, in which three inclination portion 24Aa, 24Aa, and 24Aa, are formed in engage portion 24A, is shown in Fig. 8(a) (b).

The engage portion 24A is provided on the upper part of washer main body 24B and disk portion 24 C that has recess 24Ca is provided.

Subsequently, in the above fastening structure, the principle that prevents the nut from loosening will be explained.

As indicated in Fig. 1, when receive the vibration while tightened by using the nut 1 and washer 2, screw rod 12 side is assumed to be no turn,

The nut 1 starts rotating (in anti-clockwise direction) and it loosening.

The nut 1 and washer 2 are integrated by composing as indicated in Fig. 1.

Therefore, if the nut 1 and washer 2 rotate together, the effect of the loose stop is not produced.

If the nut 1 and washer 2 rotate together, the effect of the loose stop is not produced.

However, if it is a fastening structure indicated in Fig. 1, washer 2 starts not rotating, and the nut 1 only rotating.

As for the reasoning, the maximum diameter of the contact surface between the nut 1 and washer 2 is r as shown in Fig. 5 (a) .

On the other hand, the maximum diameter on the surface that washer 2 comes in contact with installation object 11 (back) is R.

By the vibration, whether the nut 1 is previously rotated to washer 2 or whether washer 2 is previously turned to the surface, if coefficient of friction is the same, superiority or inferiority is decided by the bigness and smallness of each effective friction diameter.

In this embodiment, because it is R>r, power that washer 2 clings to the surface (in a word, it doesn't slip and do not turn) wins.

Therefore, Washer 2 doesn't slip, not rotate, and the nut 1 is rotated previously.

Moreover, the back of washer 2 has dented gradually like the taper toward the center.

Namely, it is small conic recess shape of the lift angle.

Therefore, where the tightening power of the nut 1 is small, only the portion of six horn corner of washer 2 having the cross section hexagonal shape comes in contact with the surface.

The entire back of washer 2 gradually comes in contact with the surface while being tightened by strong power.

However, the effective friction diameter on the back when becoming this situation becomes so almost an average value with size R and size r.

Where becoming it, the effective friction diameter on the back becomes so almost an average value with size R and size r.

On the other hand, the effective friction diameter on the side that comes in contact with the nut 1 of washer 2 is an average value of size r and washer inside diameter.

Therefore, the value of the former increases in size still.

That is, washer 2 does not slip and turn.

Thus, in Fig. 5, on surface of washer 2 (slope portion 2Aa) and back surface 2Ba, the relation of R>r is used under the condition of the almost same coefficient of friction.

However, only to the surface side by applying the surface treatment (for instance, fluororesin is printed out or applied) to which coefficient of friction becomes small very much compared with back surface 2Ba.

As a result, the annular processing itself to form the portion of engaging portion 2A can be omitted.

As well as the case of the nut indicated in Fig. 2-4, a slope portion can be formed directly on washer main body 2B.

However, the surface treatment tends to come off and to fall when tightening by strong power.

In addition, the back of washer is dented and washer is an elastic body if washer is made from iron.

Therefore, the pressing power to the surface of the outer periphery portion of washer 1 is more strongly than the pressing power in the inside diameter portion, thereby strongly comes in contact with surface.

This gives the effect that relatively enlarges the effective friction diameter by a geometrical previous calculation of the back surface (= almost average value of size R and the inside diameter of washer).

Therefore, the frictional force that clings to the surface (washer 1 will not turn) is improved further.

This affirms no turn of washer by experimenting on the nut of M16.

Where washer 2 is not rotated, the nut 1 turns in the loosening direction (anti-clockwise direction) against the surface of washer because of the vibration etc.

By the effect of a slope portion that has come in contact between the nut 1 and washer 2, when the nut 1 starts turning, washer 2 will be strongly pressed against the surface.

When the nut 1 starts turning, washer 2 will be strongly pressed against the surface.

In other words, it becomes the same effect as tightening the screw rod (bolt) at the time of tightening more strongly.

Therefore, the nut 1 never loosens.

Vibration test is performed, when the trial product for M16 is manufactured, and the nut is tightened by torque 30Nm.

A usual nut loosens when the shake of about several 1000 times is received.

However, in case of the test of this condition at all, it is confirmed that goods of this invention do not loosen by the shake of about one million times.

In addition, when loosening it, it was possible to loosen it simply by the torque in the vicinity of 25-40Nm.

When the nut 1 is tightened, the contact surface of the nut 1 and the washer 2 becomes the pressing power of the same uniform value on any surface.

However, the behavior when the nut 2 started loosening because of the vibration once, the direction of a contact slope both nut and washer rises from A portion to the rectilinear toward B portion.

On the contrary, the rotation direction of the nut that starts loosening always becomes a circular arc tangential direction.

Therefore, in the contact surface of the nut and washer, a relative angle where each other slips is different according to the contact position.

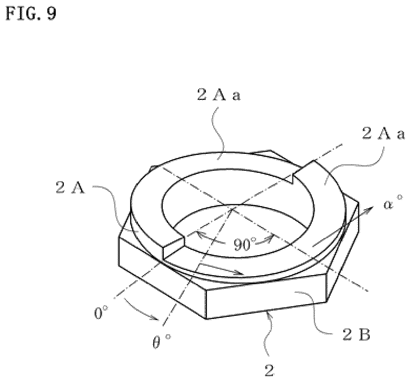

For instance, as indicated in Fig. 9, at a minimum position in which the slope begins (in Fig. 9 and θ=0°), the obliquity of the tangential direction to the circular arc is 0°.

Therefore, it doesn't contribute loosening easily.

At the position of θ=90° in the other side, the tangential direction becomes identical with a slope direction.

As a result, the obliquity of this portion becomes the maximum, and becomes α°.

In a word, it becomes a obliquity not loose most.

In Fig. 10, in case of the number of a slope portion is 2, the lowest slope position (A portion of Fig. 2(b)) is assumed to be 0°and the highest position (B portion of Fig. 2 (b)) is assumed to be 180°.

Furthermore, in Fig. 10, it was the loose position change of washer is calculated in the theory.

Namely, the case where it is 3.5°in slope angle in washer for M16 (screw pitch 2mm) is calculated in the theory.

In this Fig. 10, "loose magnification" means that, with a slope angle at the position kept, theoretical slope difference H of the slope if it rounds in circular arc is divided in pitch P (=H/P).

When this value is 1.0, the difference becomes equal to the screw pitch.

This position will become bound for loosens the nut or do not loosen the nut.

If the value is a position of 1.0 or less, the effect of the loose stop is not produced by the contact surface.

In view of Fig. 10, from starting location to about 30°, and from the highest position 180°to about 150°, it is 1.0 or less.

Therefore, it doesn't contribute to the loose stop effect.

Because the magnification is 1.0 or more from 30 to about 150°, the loose stop effect is produced.

The position of 90°is about magnification 2.0.

As a result, the highest loose stop effect is produced.

By the way, in case of tightening of the nut 1, general tool, that is to say,
tool having;
engaging portion that engages with bolt head portion or nut and outer periphery portion of washer and
hold portion concatenated to the engaging portion may be used.

For instance, six corner spanner (or spanner having 12 corners) may be used and the nut 1 may be rotated to the tightening rotation direction.

It is the same as tightening a usual nut.

Because there is a difference between the nut 1 and the washer 2, even if only the nut 1 is rotated, the washer 2 is automatically and simultaneously rotated, and it is tightened.

As the nut 1 and the washer 2 is superposed, the spanner put around by both nut 1 and washer 2 thereby it is also possible to simultaneously rotate nut 1 and washer 2.

Where loosening, it doesn't loosen even if nut only 1 is rotated.

It is necessary to rotate both in the direction of loosening at the same time putting the spanner on both nut 1 and washer 2.

Although first of tightening, the position of nut 1 and washer 2 comes in succession,
where the vibration is received by the time passage etc. and the position of nut 1 and washer 2 shifts in the circumferential direction,
the state that although the spanner hangs in nut 1, the spanner doesn't hang to washer 2, may be caused.

It is not possible to loosen it in such a state.

For this case, nut 1 is rotated in the direction of tightening with the spanner once.

The configuration of washer 2 and the configuration of nut 1 are made to coincide and they are matched.

Then, the spanner falls like the stone and it hangs to both nut 1 and washer 2.

Therefore, it only has to rotate nut 1 and washer 2 in the direction of loosening additionally.

That is, it is necessary to take the procedure of two stages of loosening it again after nut 2 is rotated in the direction of tightening once.

Thus, by rotating nut 1 and washer 2 together, it is possible to loosen them without damaging the screw rod, the nut, washer and the like by rotating nut 1 and washer 2 together.

Because the state of the fastening is simply released, components such as the screw rod, nut, and washer can be recycled.

In the above-mentioned embodiment, it is a fastening structure of the combination of the nut and washer that has a slope portion.

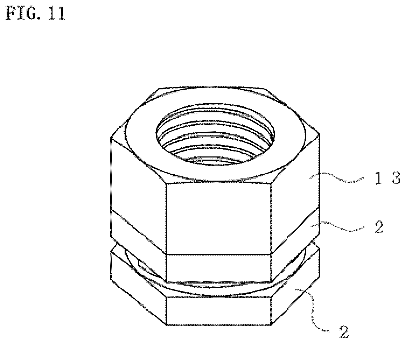

However, the invention doesn't limit above, as shown in Fig. 11, two of washer (see Fig. 5) having a slope portion may be combined to flat washer.

A similar effect is achieved when using it as well as a usual flat washer.

Numeral 13 is a usual nut.

That is, two washers 2, 2 indicated in Fig. 5 are made, and the surface (the second surface), to which inclination portion 2Aa and 2Aa are formed, are touched mutually and matched.

As a result, washer which have the configuration having the cross-section hexagon can be made by two couple of washer.

If the adhesive is applied to slope portion 2Aa, it combines and it is possible to treat as one washer (washer of the present invention).

By doing above, if product of this invention is placed and used under the usual hexagon nut or cephalon of hexagon bolt on the market, as well as the above-mentioned embodiment, the loose stop effect of the nut and the bolt can be achieved.

In addition, the back of washer on the side that comes in contact with the bolt head portion and the nut is not the surface of the conic recess shape that the center portion dents, and it is also possible to assume a flat plane.

In addition, where the nut is tightened, the phase of the nut and washer is matched.

They are tightened as a whole with the tool such as spanners.

Even if the position of the nut shifts because of the vibration, where the nut is re-tightened and phases it to washer, it is possible to loosen it as a unit.

### [Explanation of Reference Numerals]

1,1,13,21 Nut
'1A, 1A', 21A Surface
1Aa, 1Ab, 21Aa Slope portion
2,22,23,24 Washer
2A, 22A, 23A, 24A Engaging portion
2Aa, 22Aa, 23Aa, 24Aa Slope portion
2B, 22B, 23B, 24B Main body of washer
23C, 24C Disk portion
2Ba, 23Ca, 24Ca Back surface
11 Installation object
11a Surface
12 Screw rod
13 Attachment material

## Claims

1. A fastening structure comprising:
a screw stick to provide the installation object is penetrated into an installation hole of an attachment member,
a tip of the screw stick is projected,
a nut is placed to the tip of the screw via a washer,
a slope portion, in which height is gradually formed to lower toward the tightening rotation direction of the nut, is provided according to the circumferential direction,
the washer is provided with
a second surface that has the slope portion formed corresponding to a slope portion of the first surface in the nut according to the circumferential direction is provided,
the washer and the nut are provided such that the slope portion of the first surface and the second surface are overlapped and superposing up and down mutually,
configuration of the nut and the washer are formed such that they are coincident with the circumferential direction,
in the state that the slope portion of the first surface and a slope portion on the second the surface are overlapped without the clearance.

2. The fastening structure as defined in Claim 1 wherein the first surface and the second surface have one, two, three or six slope portions having the identically shaped.

3. The fastening structure as defined in Claim 1 or 2 wherein the nut and the washer are the configuration in which it has the cross-section hexagon and is same size of external configuration.

4. The fastening structure as defined in any one of Claims 1 to 3 wherein the washer is that the surface on the other side to the second the surface is formed to the conic recess shape that has dented gradually toward the center portion.

5. The fastening structure as defined in any one of Claims 1 to 4 wherein the slope portion is that the difference of elevation between the lowest position and the highest position is larger than 1/slope number of the screw pitches according to a slope number.

6. The fastening structure as defined in any one of Claims 1 to 4 wherein the slope of the slope portion is formed like the spiral while sustaining the same lift angle according to the circumferential direction centering on the axis of the screw rod.

7. The fastening structure as defined in any one of Claims 1 to 6 wherein the outer periphery surface of the slope portion of one or both washer or the nut should be curve surface having diameter of the same size of opposite width as parallel of the washer or the nut, and
the curve surface stands up from the locating of the lowest position of the slope portion.

8. The fastening structure as defined in any one of Claims 1 to 7 wherein
the step of by using a tool that has an engaging portion which is engaged with the outer periphery portion of the nut and the washer, and a hold portion concatenated to the engaging portion,
the engaging portion of the tool is engaged with the outer periphery portion of the nut,
the nut is rotated to the tightening rotation direction once, and
the configuration of the nut and the washer is coincident in the circumferential direction
following the above step, the step of
the engaging portion of the tool is engaged with the washer addition to the nut, and
the nut and the washer are rotated together in the direction of loosening.

9. The washer wherein in case of providing the installation object to the attachment material by using the bolt or the nut,
the washer providing between the bolt head portion or the nut and the installation object,
including the first and the second material using while piled up,
the first member comprising;
first surface which has slope portion to which height is gradually formed to lower toward tightening rotation direction of the nut according to circumferential direction,
the second member is the second surface that has the slope portion formed corresponding to a slope portion of the front page in the nut according to the circumferential direction and
under the state that a slope portion of first surface and a slope portion of the second surface is overlapped up and down without the clearance,
the configuration of the first and the second members are coincident with in the circumferential direction.

10. The fastening structure wherein in case of providing the installation object to the attachment material by using the bolt or the nut,
a fastening structure that washer is provided between the bolt head portion or the nut and the installation object,
the washer is provided with the first member and the second member used while piled up,
the first member comprising first surface in which
in the circumferential direction, the slope portion of height lowers gradually toward the tightening rotation direction of the nut,
the second member comprising second surface in which
a slope portion is formed according to the circumferential direction corresponding to the slope of the first surface in the nut, and
second surface that comes in contact with the front surface of the nut is provided,
under the state that the front surface and the second surface are overlapped up and down without the clearance,
the configuration of the first member and the second member are formed to coincident in the circumferential direction.

11. The method of releasing the fastening in the fastening structure described in claim 10,
by using a tool comprising:
an engaging portion which is engaged with the outer periphery portion of the bolt head portion or the nut and washer, and
a hold portion concatenated to portion of the engaging portion,
an engaging portion of the tool is engaged with
the member on the bolt head portion or the nut
and the engaging portion of the tool is engaged with
the member on the bolt head portion or the member of the nut side of the first member or second member,
the member on the bolt head portion or the nut and
the member on the bolt head portion or the member of the nut side
are turned to the tightening rotation direction once,
the step that configuration of the first member and the configuration of the second member is put into the state coinciding in the circumferential direction,
following the step,
the portion of engaging portion of the tool is engaged with the bolt head portion or the nut, the first member and the second member,
the step wherein the bolt head portion or the nut, the first member and the second member are rotated in direction of loosening.
